# DEMANDE DE BREVET EUROPEEN

(11) **EP 4 372 145 A1**
(43) Date de publication de la demande: **22.05.2024**
(21) Numéro de dépôt: 23209251.0
(22) Date de dépôt: 10.11.2023
(51) Int. Cl.: D21H 17/22, B65D 65/42, D21H 19/12, D21H 19/84, D21H 27/10, D21H 17/24, B32B 29/00, D21H 17/28, D21H 17/30, D21H 17/60, D21H 19/18, D21H 19/34, D21H 21/16, D21H 27/30

(54) **SUPPORT SOUPLE ENDUIT À PROPRIÉTÉS BARRIÈRE ET THERMOSCELLANT**

(30) Priorité: 16.11.2022 FR 2211896; 21.07.2023 FR 2307856
(71) Demandeur: Guyenne Papier, 24800 Nanthiat (FR)
(72) Inventeur: LEPETIT, Amaury, NANTHIAT (FR)
(74) Mandataire: Condorcet IP

(57) **Abrégé**

L'invention concerne un support souple enduit (4), destiné à une fabrication d'un produit fini, notamment d'un emballage, le support souple enduit ayant une forme plane lorsqu'il est librement posé à plat, ce support souple enduit comprenant un support souple contenant, en poids, au moins 90%, ou au moins 95%, d'une première matière naturelle, ce support souple étant enduit d'une couche enduite contenant, en poids, au moins 50%, ou au moins 80%, ou au moins 90%, ou au moins 95%, d'une deuxième matière naturelle formée par au moins un polymère thermoscellant, ce ou ces polymères thermoscellants (10) présentant notamment l'une au moins des propriétés suivantes : barrière oxygène, barrière à l'huile/graisse, barrière à l'eau, barrière à la vapeur d'eau.

## Description

La présente invention concerne un procédé de fabrication d'un support souple, notamment d'un papier, présentant une face (recto ou verso) ou deux faces (recto et verso) avec une couche enduite composée d'un ou de plusieurs polymères filmogène barrières et thermoscellant.

L'invention concerne également un support souple enduit. L'invention se rapporte également à un emballage comprenant le support souple enduit selon l'invention.

L'utilisation de polymères filmogènes est répandue dans le domaine des revêtements de surface, notamment dans le domaine d'une enduction, d'une lamination ou d'un complexage sur un support, notamment un papier ou un carton.

En effet, ces polymères filmogènes permettent d'imperméabiliser une surface afin de la rendre barrière aux éléments tels que la graisse.

Par exemple, la demande de brevet FR 3107529 A décrit ces polymères filmogènes comportant un matériau thermoplastique à base de caséine et/ou de caséinate, destiné à enduire une couche de papier ou un carton.

Ces polymères, par exemple initialement sous forme d'une solution ou d'un liquide, nécessitent ou non un traitement supplémentaire permettant une stabilisation des fonctionnalités.

Lorsque la surface à imperméabiliser se trouve sur une des faces d'un support souple, notamment sur un papier de faible grammage, par exemple inférieur à 200 g/m², dont la rigidité du support souple n'est pas suffisante pour contrer la rétractation induite par ces polymères filmogènes, les bords du support souple tendent, au bout d'un certain temps, à s'enrouler sur eux-mêmes.

Cette tendance qu'ont les bords d'un support souple enduit avec le ou les polymères filmogènes, initialement plat, à se relever, puis à s'enrouler, de chaque côté est définie comme étant un « effet d'enroulement » ou un « curl » (terminologie anglaise).

Le « curl » est d'autant plus important que la rétraction induite par les polymères filmogènes est importante.

De façon générale, le support souple enduit obtenu selon un procédé classique est caractérisé par un « curl » très important, à savoir que les bords s'enroulent de plusieurs tours. Un « curl » trop marqué empêche le support souple enduit final d'être utilisé en conditions industrielles.

En outre, ce type de support souple enduit classique nécessite souvent une multitude de couches distinctes afin d'obtenir des propriétés barrières suffisantes.

L'invention vise notamment à développer un nouveau support souple enduit.

L'invention a ainsi pour objet un support souple enduit, destiné à une fabrication d'un produit fini, notamment d'un emballage, le support souple enduit ayant une forme plane lorsqu'il est librement posé à plat, ce support souple enduit comprenant un support souple contenant, en poids, au moins 90%, ou au moins 95%, d'une première matière naturelle, ce support souple étant enduit d'une couche enduite contenant, en poids, au moins 50%, ou au moins 80%, ou au moins 90%, ou au moins 95%, d'une deuxième matière naturelle formée par au moins un polymère thermoscellant, ce ou ces polymères thermoscellants présentant notamment l'une au moins des propriétés suivantes : barrière oxygène, barrière à l'huile/graisse, barrière à l'eau, barrière à la vapeur d'eau.

Grâce à l'invention, il est possible d'obtenir un support souple enduit naturel, ayant des propriétés barrières graisses et/ou eau et/ou vapeur et/ou gaz et/ou étant thermoscellant. Ceci est particulièrement avantageux en termes de conformité avec le respect de l'environnement.

Selon l'invention, le support souple enduit fini peut contenir, en poids, au moins 80% ou au moins 90%, voire au moins 95%, de matières naturelles, quand on prend en compte à la fois la première matière naturelle du support souple et la deuxième matière naturelle formée par le polymère thermoscellant.

Selon l'un des aspects de l'invention, le ou les polymères thermoscellants formant la couche enduite comprennent au moins une cire naturelle telle qu'une cire de carnauba, une cire de soja, une cire d'abeille, une cire de pin ou encore une cire de riz.

Selon un autre des aspects de l'invention, le ou les polymères thermoscellants formant la couche enduite sont à base de polysaccharides tels que l'alginate ou l'amidon, ou le chitosane ou un dérivé cellulosique.

Selon l'un des aspects de l'invention, le polymère thermoscellant est biodégradable tel un acide polyhydroxyalcanoate (PHA), un acide polyhydroxybutyrate (PHB), un acide polylactique (PLA) ou une lignine.

Selon un autre des aspects de l'invention, le ou les polymères thermoscellants formant la couche enduite comprennent :
- au moins un caséinate et/ou au moins une caséine.

Selon l'un des aspects de l'invention, le ou les polymères thermoscellants, notamment la cire, sont présents dans la couche enduite avec un pourcentage en poids compris entre 1% et 30%, notamment entre 5% et 20%, notamment entre 10% et 15%, notamment entre 5% et 15%.

Selon l'un des aspects de l'invention, le grammage du support souple enduit est compris entre 20 et 300 g/m2, préférentiellement est compris entre 40 et 100 g/m2.

L'invention concerne encore un emballage comportant deux zones appartenant à un même support souple enduit tel décrit plus haut, ou appartenant respectivement à deux supports souples enduits tels que décrits plus haut, ces zones étant appliquées l'une contre l'autre par leurs faces enduites respectives.

Ainsi le scellage s'effectue préférentiellement d'une face enduite sur une autre face enduite, ce scellage étant aussi appelé scellage chair-chair. Le scellage peut, en variante, être de type chair-peau.

Selon l'un des aspects de l'invention, le polymère thermoscellant est choisi pour obtenir une force de scellage entre les zones scellées ensemble qui est supérieure ou égale à 2,5 N/15mm et de préférence supérieure ou égale à 3,5 N/15mm.

L'invention a encore pour objet un procédé de fabrication d'un emballage comportant les étapes suivantes :
- fournir deux zones de support souple enduit tel que décrit plus haut,
- sceller ces deux zones ensemble en pressant ces deux zones l'une contre l'autre en apportant de la chaleur, notamment au moyen de mâchoires chauffantes, de manière à obtenir l'emballage.

Le scellage peut être réalisé avec des machines à emballage en flux (ou en anglais « flow-pack machines ») afin de produire différents types d'emballages, on parle alors de thermoscellage. Sous l'effet de la chaleur, le polymère thermoscellant va sceller les deux zones de support souple enduit ensemble pour obtenir un emballage. Il est également possible d'utiliser d'autres technologies comme le scellage sous ultra-son qui va permettre le fluage du polymère thermoscellant jusqu'à l'obtention d'un scellage hermétique. Le scellage peut être aussi bien vertical qu'horizontal.

Le procédé de fabrication peut comporter l'étape d'enduire le support souple sur une face recto et/ou une face verso, avec une ou des sauces à base d'eau et contenant un ou des polymère filmogène barrière et thermoscellant.

Le procédé de fabrication peut comporter ensuite une étape de séchage du support souple enduit.

On distingue « support souple » et « support souple enduit ». Le support souple est brut, non encore enduit. Le support souple enduit correspond au support souple ayant reçu la couche enduite.

Cela est également applicable pour tout type de support souple, à savoir « papier » et « papier enduit ».

Grâce au procédé selon l'invention, la tendance (« curl ») qu'ont les bords du support souple enduit à s'enrouler sur eux-mêmes après la fabrication dudit support souple enduit est empêchée.

Ainsi, le procédé selon l'invention permet la fabrication industrielle dudit support souple enduit dans une chaîne de fabrication automatisée alors qu'un tel support souple enduit aux propriétés barrières et thermoscellantes ne pouvait être obtenus jusqu'à présent à cause à la fois de l'effet d'enroulement du support souple enduit, de la dépose faite ainsi que des résultats obtenus. L'invention permet d'obtenir une complémentarité entre fonctions barrière et thermoscellage, du niveau de fonctions barrières et de la composition naturelle à au moins 90% du support souple enduit.

Cela est permis par les différentes étapes du procédé selon l'invention, comme c'est expliqué ci-après.

Le ou les étapes de séchage de l'invention permettent de sécher au maximum le support souple enduit afin que ledit support souple enduit contienne l'humidité résiduelle qui convient afin d'obtenir un support plat, sans craquelures de surface ou autres défauts limitant alors son utilisation en impression ou dégradant ses fonctionnalités barrières ou thermoscellante.

Le séchage peut intervenir aussitôt après le dépôt de la couche barrière et thermoscellant de sorte que cette couche n'ait pas encore le temps de sécher naturellement, et ce afin de maximiser les contraintes auxquelles les éléments contenus dans la couche sont soumis.

Ainsi, lorsque ces effets se sont compensés, le support souple enduit, posé sur une surface plane, présente une planéité satisfaisante.

Le polymère filmogène barrière thermoscellant déposé sur le support souple enduit se suffit à lui-même pour réaliser un thermoscellage du support souple enduit. Autrement dit, ledit polymère filmogène thermoscellant ne nécessite pas de couche adhésive supplémentaire ou de couche de polymère additionnelle afin de réaliser un thermoscellage du support souple enduit.

Ainsi, un nombre de couches nécessaires pour le support souple enduit est réduit en vue de simplifier la structure dudit support souple enduit, tout en optimisant les propriétés mécaniques et chimiques optimales.

Cela est plus particulièrement avantageux en ce que le procédé selon l'invention est plus respectueux de l'environnement et plus économique que le procédé classique faisant intervenir plusieurs couches, car moins d'étapes, moins de matière, moins d'énergie et moins de temps sont nécessaires pour obtenir un support souple enduit dont les propriétés sont optimales.

Selon l'un des aspects de l'invention, le grammage du support souple est compris entre 20 et 300 g/m2, est compris entre 20 et 100 g/m2, préférentiellement est compris entre 40 et 100 g/m2.

Selon l'un des aspects de l'invention, la densité surfacique du dépôt du polymère filmogène thermoscellant, mesurée par différence de pesée entre le support souple enduit sec et le support souple sec, est comprise entre 4 et 18 g/m2.

Dans ces gammes de densité surfacique, les propriétés barrières peuvent être obtenues de façon optimale. Le support souple et le support souple enduit ont été séchés avant la pesée pour enlever toute trace d'eau résiduelle.

Selon l'un des aspects de l'invention, il est possible d'appliquer au moins deux fois le polymère filmogène thermoscellant sur la face recto et/ou verso du support souple de sorte à obtenir une couche du polymère filmogène thermoscellant.

Par exemple, dans le cas d'une couche de dépôt du polymère filmogène thermoscellant de 10 g/m², ce dépôt peut être réalisé par deux postes de couchage successifs du même polymère de 5 g/m². Ainsi, la couche du polymère filmogène thermoscellant présente une surface uniforme et une bonne étanchéité.

Selon l'un des aspects de l'invention, la température de séchage est supérieure ou égale à 100°C.

Selon l'un des aspects de l'invention, dans lequel la méthode de dépôt est choisie entre l'enduction ou l'impression.

Selon l'un des aspects de l'invention, le support souple est choisi parmi papier, carton ou tout autre matière souple composée de polymère naturel, existant à l'état naturel. Ce ou ces polymères sont ainsi sans transformation chimique spécifique modifiant leur nature. Préférentiellement, le papier a au moins une face lisse obtenue par l'au moins une des méthodes suivantes : frictionnage, calandrage ou couchage. Avantageusement, le support souple contient la première matière naturelle formée par des fibres naturelles. Ce support souple est par exemple un papier fait de fibres naturelles.

Selon l'un des aspects de l'invention, le papier est choisi parmi un papier offset, papier recyclé, papier calque, papier sulfurisé, et papier Kraft.

Par exemple le papier Kraft dont les caractéristiques sont connues en soi, présente une résistance mécanique optimale au vu du grammage de papier.

Selon l'un des aspects de l'invention, le papier a un aspect blanc ou un aspect brun.

Le polymère barrière et thermoscellant est enduit de manière homogène et a une épaisseur uniforme sur la face recto du support souple. Ainsi, le revêtement du polymère barrière et thermoscellant ainsi obtenu est bien régulier et sans marque, ni rayure ou faille par lesquelles un fluide (gaz, liquide) pourrait s'introduire dans le support souple enduit et générer un ramollissement ou des fuites dudit support souple enduit.

Parmi les différentes techniques d'enduction, la coucheuse à lame d'air ou la coucheuse à rideau munie d'une buse de revêtement, permet de maîtriser précisément le dépôt d'enduction avec une grande qualité et d'assurer un revêtement uniforme et régulier sur le support souple.

Selon l'un des aspects de l'invention, le polymère filmogène thermoscellant a l'une ou la combinaison des propriétés suivantes : barrière oxygène, barrière à l'huile/graisse, barrière eau, barrière vapeur d'eau, et/ou barrière antifongique.

Selon l'un des aspects de l'invention, le polymère filmogène thermoscellant a l'une ou la combinaison des propriétés suivantes : barrière oxygène, barrière à l'huile/graisse.

Selon l'un des aspects de l'invention, le polymère filmogène thermoscellant est compatible alimentaire.

Selon l'un des aspects de l'invention, le polymère filmogène thermoscellant comprend un polymère thermoplastique.

Selon l'un des aspects de l'invention, le polymère filmogène thermoscellant présente l'une au moins des propriétés suivantes : biosourcé, biodégradable, compostable. En tout état de cause, le support souple enduit est avantageusement naturel à au moins 90%.

Selon l'un des aspects de l'invention, le support souple enduit présente l'une au moins des propriétés suivantes : biosourcé, biodégradable, compostable et/ou repulpable.

Selon l'un des aspects de l'invention, le support souple enduit présente les propriétés suivantes : biosourcé, biodégradable, compostable et repulpable.

Selon l'un des aspects de l'invention, le polymère filmogène thermoscellant comprenant au moins un caséinate et/ou une caséine présentant des propriétés barrières à l'huile/graisse et à la barrière oxygène.

La quantité d'eau dans la solution à enduire (encore appelée sauce d'enduction) est dépendante de la viscosité souhaitée et peut dépendre de la nature du support souple.

Selon l'un des aspects de l'invention, la viscosité de la sauce d'enduction est inférieure à 400 mPa.s, ou inférieure à 200 ou 120 mPa.s.

Selon l'un des aspects de l'invention, le polymère filmogène thermoscellant comprend en outre :
- de l'eau ; et
- au moins un plastifiant différent de l'eau.

Selon l'un des aspects de l'invention, le polymère filmogène thermoscellant comprend :
- au moins un polymère hydrosoluble, à savoir un polymère soluble dans l'eau, de préférence soluble dans l'eau à une température ambiante lorsque la concentration massique du polymère hydrosoluble est supérieure ou égale à 2,5%.

Ainsi, le polymère filmogène thermoscellant a des propriétés mécaniques et chimiques améliorées.

Selon l'un des aspects de l'invention, le polymère filmogène thermoscellant est associé à :
- au moins un polymère hydrosoluble, à savoir un polymère soluble dans l'eau, de préférence soluble à température ambiante.

Ainsi, le polymère filmogène thermoscellant a des propriétés mécaniques et chimiques améliorées.

De préférence, les polymères hydrosolubles comprennent des unités hydrophiles. Par exemple, les polymères hydrosolubles peuvent comprendre des hétéroatomes tels que O ou N dans leur chaine principale. Les polymères hydrosolubles peuvent également comprendre des groupements hydrophiles tels que -OH, -NH2,-NH-, -CO2- , ou -SO3- .

Selon l'un des aspects de l'invention, le polymère hydrosoluble est choisi parmi les polymères hydrosolubles non ioniques, les polymères hydrosolubles amphotèriques, les polymères hydrosolubles cationiques, les polymères hydrosolubles anioniques, et leurs mélanges.

Selon l'un des aspects de l'invention, le polymère hydrosoluble est choisi parmi les alcools polyvinyliques, les polyoxyalkylènes, les polyvinylpyrrolidones, les acides poly(méth)acryliques, les polymères cationiques, et leurs mélanges.

Parmi les polymères hydrosolubles, on peut également citer les polyacrylamides.

Selon l'un des aspects de l'invention, les éléments de la sauce à enduire sont choisis parmi les polyols, les acétates de glycérol, les propionates de glycérol et leurs mélanges. A titre d'exemples de polyols, on peut citer le glycérol, l'hexane triol, le mannitol, le sorbitol, les glycols, dont l'éthylène glycol et leurs dérivés. Préférentiellement, les éléments de la sauce à enduire sont choisis parmi le glycérol, le sorbitol, et leurs mélanges. Selon un mode de réalisation, le plastifiant est du glycérol.

Ainsi, les éléments de la sauce à enduire permettent d'augmenter les propriétés mécaniques du polymère filmogène thermoscellant face à l'humidité.

Selon l'un des aspects de l'invention, le tensioactif est choisi parmi la lécithine, les phosphonates diacétyléniques, polysorbates. Préférentiellement, le tensioactif est la lécithine.

Selon l'un des aspects de l'invention, l'agent hydrophobe peut être choisi parmi :
- les esters de polyacide carboxylique ;
- les acides carboxyliques en C3-C33, de préférence les acides gras en C4-C28, et, encore plus préférentiellement les acides gras insaturés en C6-C28 ; et
- leurs mélanges.

Les esters de polyacide carboxylique peuvent être issus d'au moins un polyacide carboxylique et d'au moins un alcool, de préférence un alcool en C1-C18.

Parmi les polyacides carboxyliques préférentiellement retenus dans le cadre de l'invention, on peut citer l'acide citrique, l'acide hydroxycitrique, l'acide tartrique, l'acide malique, l'acide oxalique, l'acide malonique, l'acide succinique, l'acide glutarique, l'acide adipique, l'acide maléique, l'acide fumarique.

Parmi les alcools privilégiés conformément à l'invention, on peut citer les alcools en C2-C6, comme par exemple l'éthanol, le n-propanol, l'iso-propanol, le n-butanol et le tert-butanol.

Selon l'un des aspects de l'invention, l'agent hydrophobe est choisi parmi le triéthyl citrate, le tributyl O-acétyl citrate, le tributyl citrate et leurs mélanges.

Selon l'un des aspects de l'invention, l'agent hydrophobe est un acide carboxylique en C3-C33, de préférence un acide gras en C4-C28, et, encore plus préférentiellement un acide gras insaturé en C6-C28.

Parmi les acides gras en C4-C28 retenus dans le cadre de l'invention, on peut citer l'acide caprylique, l'acide caprique, l'acide laurique, l'acide myristique, l'acide palmitique, l'acide stéarique, et leurs mélanges.

Parmi les acides gras insaturés en C6-C28 particulièrement intéressants, on peut citer l'acide palmitoléique, l'acide oléique, l'acide linoléique, et leurs mélanges.

Selon l'un des aspects de l'invention, le support souple enduit peut être imprimable et/ou imprimé.

Selon l'un des aspects de l'invention, la propriété barrière à l'huile et/ou aux graisses du polymère filmogène thermoscellant a pour un indice Cobb 1800 inférieur à 10 g/m², préférentiellement inférieur à 6 g/m², plus particulièrement inférieur à 3 g/m². L'indice Cobb 1800 est idéalement compris entre 1 à 2,5 g/m².

Le niveau de Kit pour obtenir la propriété barrière à l'huile et/ou aux graisses du polymère filmogène thermoscellant est supérieur ou égal à 7, préférentiellement supérieur ou égal à 10.

Selon l'un des aspects de l'invention, la propriété barrière à l'oxygène du polymère filmogène thermoscellant a un niveau de perméabilité inférieur ou égal à 1000 cm³/(m².24h), préférentiellement inférieur ou égal à 100 cm³/(m².24h), plus particulièrement inférieur ou égal à 20 cm³/(m².24h).

Selon l'un des aspects de l'invention, la propriété barrière à l'eau (notamment eau liquide) du polymère filmogène thermoscellant a un indice Cobb 1800 inférieur ou égal à 20 g/m², préférentiellement inférieur ou égal à 10 g/m², plus particulièrement compris entre 1 et 5 g/m².

Selon l'un des aspects de l'invention, la propriété barrière à la vapeur d'eau du polymère filmogène thermoscellant a un coefficient de transmission de la vapeur d'eau (WVTR) inférieur ou égal à 10 g/(m².24h) et idéalement inférieur ou égal à 5 g/(m².24h) en condition standard (23°C/50%HR). En condition tropicale (38°C/90%HR), le WVTR est inférieur ou égal à 100 g/(m².24h) et idéalement inférieur ou égal à 50 g/(m².24h).

Le procédé de fabrication peut comprendre les étapes suivantes :
a) déposer une première sauce d'enduction, notamment à base d'eau, contentant un ou plusieurs polymères barrière et thermoscellant, notamment sur la face recto ;
b) déposer une deuxième sauce d'enduction, notamment à base d'eau, notamment contentant un ou plusieurs polymères barrière et thermoscellant, notamment sur la face verso ;
c) sécher ledit support souple enduit.

Les sauces, après séchage, forment les couches enduites du support souple enduit.

Ainsi, les première et deuxième sauces d'enduction, après le séchage, permettent que des « curls » vont se compenser de sorte que le support souple enduit présente une bonne planéité et une bonne homogénéité de surface.

Selon l'un des aspects de l'invention, l'une au moins des première et deuxième sauces d'enduction contient au moins un caséinate et/ou une caséine.

Les première et deuxième sauces d'enduction à base d'eau peuvent présenter certaines ou la totalité des caractéristiques décrites plus haut en lien avec le ou les polymères filmogènes barrière et thermoscellant.

Selon l'un des aspects de l'invention, les première et deuxième sauces d'enduction comportent toutes les deux au moins un caséinate et/ou une caséine.

Selon un autre mode de réalisation de l'invention, la méthode de dépôt est choisie parmi l'extrusion-couchage et la lamination, le complexage.

Le dépôt du polymère filmogène thermoscellant sous forme d'un film avec une humidité faible, à savoir inférieure à 8 %, peut se faire sur la face recto du support souple en vue de former un support souple enduit. La chaleur émise par la machine servant à faire le dépôt permet d'enlever cette humidité résiduelle.

L'invention a également pour objet un support souple enduit obtenu par le procédé selon l'invention.

L'invention concerne encore un emballage comprenant le support souple enduit obtenu par le procédé selon l'invention.

Selon l'un des aspects de l'invention, l'emballage comporte un empilement de plusieurs supports souples obtenus par le procédé selon l'invention.

Selon l'un des aspects de l'invention, l'emballage est obtenu à partir d'un support souple enduit en thermoscellant entre elles certaines zones de support souple enduit.

Selon l'un des aspects de l'invention, le support souple présente un aspect choisi parmi : l'aspect blanc, l'aspect brun, l'aspect mat, l'aspect à effet de soie, ou l'aspect brillant.

Selon l'un des aspects de l'invention, l'emballage est fabriqué par des procédés de la lamination, d'enduction, de contre-collage, de co-extrusion ou d'extrusion-couchage.

L'invention concerne encore un produit emballé comportant :
- un contenu, par exemple une denrée alimentaire, solide ou liquide ; et
- l'emballage selon l'invention enveloppant le contenu.

Selon l'un des aspects de l'invention, le contenu est choisi parmi les produits pharmaceutiques, alimentaires, chimiques et cosmétiques.

Selon l'un des aspects de l'invention, la denrée alimentaire du contenu du produit emballé est par exemple choisie, de la viande, du poisson, des légumes, des fruits, des pâtisseries, des viennoiseries, des additifs alimentaires, des ingrédients, des aliments secs, des préparations sèches, des poudres alimentaires, des sachets de thé et de tisane, des feuilles de thé séchées, des nourritures pour des animaux.

Selon l'un des aspects de l'invention, le contenu est choisi parmi des journaux, magazines et publicités.

### Définitions

Par « enduction », on entend, par exemple, un traitement de surface consistant à appliquer un revêtement généralement liquide sur un support. Le revêtement peut avoir une composition telle un polymère filmogène.

Par « complexage », on entend, par exemple, une action mécanique permettant d'assembler de manière indissociable deux ou plusieurs matières aux propriétés mécaniques et physico-chimiques différentes.

Par « lamination », on entend, par exemple une action mécanique permettant d'appliquer un film sur un support

Par « extrusion-couchage», on entend, par exemple la technique consistant à enduire un support en y déposant par extrusion une couche de polymère fondu.

Par « impression », on entend, par exemple une application d'un revêtement via un système d'impression type flexographie ou gravure.

Par « humidité », on entend, la teneur en eau ou en vapeur d'eau dans une substance. Elle peut être exprimée en pourcentage massique, à savoir un rapport entre la masse d'eau sur la masse totale de la substance.

Le « grammage » est une grandeur caractérisant un support souple, non encore enduit, tel un papier, correspondant à sa masse surfacique, c'est-à-dire à sa masse par unité de surface. Le grammage comprend une humidité résiduelle qui varie notamment entre 4 et 8 % du poids total du support souple, notamment du papier.

Le grammage d'un support souple tel un papier est compris entre 20 à 300 g/m², préférentiellement entre 40 à 100 g/m².

Un papier « fin » a pour grammage compris entre 10 et 60 g/m², avantageusement compris entre 30 et 50 g/m².

Par « thermoscellage », on entend, par exemple un processus au cours duquel les rebords du support sont soudés à l'aide de la chaleur, avec ou sans contact direct avec le support.

Par « thermoscellant », on entend, par exemple la qualité qu'a un matériau à être soudé par le thermoscellage sans que l'on ajoute une couche adhésive supplémentaire, une couche de polymère additionnelle ou un adjuvant. Autrement dit, le matériau thermoscellant se suffit à lui-même afin de réaliser un thermoscellage.

Par « barrière », on entend, par exemple les propriétés qui protègent le contenu d'un emballage formé par le support contre les agressions et substances extérieures, ou bien qui protègent l'extérieur du contenu de l'emballage. Les barrières les plus communes sont celles contre l'oxygène, l'huile, les graisses, l'eau, la vapeur d'eau, et les champignons et microorganismes.

Par « barrière à l'oxygène », on entend, par exemple, une barrière dont un niveau de perméabilité à l'oxygène faible, c'est-à-dire inférieur à 100 cm³/(m².24h) et préférentiellement inférieur à 20 cm³/(m².24h). Cette propriété peut être requise, par exemple, pour les produits alimentaires nécessitant d'être protégés d'oxydation tels que le chocolat, le fromage ou les aliments secs.

Par « barrière à l'huile ou aux graisses », on entend, par exemple, une barrière dont un niveau de Kit est compris entre 6 et 12. Cette propriété peut être requise, par exemple, pour les produits alimentaires tels que les viennoiseries ou des nourritures de restauration rapide.

Par « barrière à l'eau », on entend, par exemple, une barrière dont l'indice Cobb est avantageusement inférieur ou égal à 20 g/m², préférentiellement inférieur ou égal à 5 g/m² et pour la durée de Cobb de 1800 secondes. Cette propriété peut être requise, par exemple, pour les produits alimentaires tels que les fruits et légumes et de la vaisselle jetable.

Par « barrière à la vapeur d'eau », on entend, par exemple, une barrière dont le coefficient de transmission de la vapeur d'eau (WVTR) est inférieur à 10 g/(m².24h) et idéalement inférieur à 5 g/(m².24h) en condition standard (23°C/50%HR). Le coefficient WVTR est inférieur à 100 g/(m².24h) et idéalement inférieur à 50 g/(m².24h) en condition tropicale (38°C/90%HR).

Par « barrière antifongique », on entend, par exemple une barrière résistante contre la prolifération de champignons et microorganismes. Cette propriété peut être requise, par exemple pour des produits alimentaires tels que des fruits mous, comme des fraises ou framboises.

Le test « Cobb » consiste à mesurer la quantité d'eau que peut absorber le support souple, notamment un papier, pendant un temps défini. Par exemple, l'indice Cobb1800 signifie que le test Cobb a été réalisé pendant 1 800 secondes, soit 30 minutes.

Cet indice Cobb 1800 s'exprime en gramme par mètre carré (g/m²). Plus la valeur de l'indice Cobb1800 est faible, meilleure est la barrière à l'eau. Des valeurs inférieures à 15 g/m² correspondent à de très bonnes barrières à l'eau pour le Cobb1800.

Ce test Cobb est réalisé en versant sur un échantillon de papier traité d'une surface de 100 cm², 100 ml d'eau distillée ou déminéralisée pendant 30 minutes (norme ISO 535 : 2014). La différence de pesée avant et après le test correspond à la quantité d'eau absorbée et donc à l'indice Cobb.

Les mesures de perméation de vapeur ou du coefficient de transmission de la vapeur d'eau (Water Vapor Transmission Rate (WVTR) selon la terminologie anglaise),

Ces mesures évaluent la quantité de vapeur d'eau qui traverse le support en 24 h à des conditions de température et d'humidité prédéfinies. De façon générale, ces tests sont soit réalisés en condition « standard » à 23°C/50% humidité relative (RH), soit en condition « tropicale » à 38°C/90% RH.

Le test est réalisé selon la norme ISO 2528, une coupelle de CaCl₂ anhydre est scellée par le support à tester. Le montage est placé dans une enceinte climatique régulée. La vapeur d'eau qui traverse le support est piégé par le CaCl₂. La différence de poids du CaCl₂ mesurée entre l'instant initial et celui mesuré au bout de 24 h correspond à la valeur de la WVTR exprimée en g/m²/ 24 h.

Plus la valeur de WVTR est basse, meilleure est la barrière à la vapeur d'eau.

Le « Kit test » permet de déterminer la résistance d'un papier à la pénétration des produits gras tels que les graisses ou l'huile.

Ce Kit test comprend, par exemple au moins 12 mélanges de réactifs contenant des quantités variables d'huile de ricin, de toluène et d'heptane. L'essai consiste à déterminer le numéro du mélange le plus élevé pour lequel il n'y a pas de transpercement ni de souillage de la surface. Le niveau de barrière est croissant de 1 à 12.

Une goutte du mélange est placée sur une feuille, puis elle est essuyée au bout de 15 secondes, et l'aspect du papier est observé (norme ISO 16532-2).

Pour certaines applications particulières, des tests plus drastiques peuvent être effectués en augmentant la surface à tester, et en faisant des tests à température élevée, à savoir supérieure à la température ambiante, ou bien en augmentant la proportion du réactif le plus agressif dans les mélanges, à savoir l'heptane.

Le test Cobb à l'huile est sur le même principe que le test Cobb à l'eau susmentionné mais en utilisant cette fois de l'huile de ricin (norme SCAN-P 37).

Il peut également être réalisé un test d'imperméabilité à l'huile de palme (norme ISO 16532-1), si les résultats sont suffisamment bons, le test à la térébenthine peut être effectué (norme ISO 16532-3).

Par « filmogène », on entend, par exemple une matière pouvant être appliquée en couche mince, principalement sous forme liquide, sur un support, et qui devient ensuite une pellicule solide, un film, ou une feuille. Cette matière filmogène peut être appliquée également sous une autre forme, par exemple en extrusion-couchage sous forme d'une matière ramollie ou fondue. De façon générale, on entend par « filmogène », notamment la tendance qu'a une matière à former un film.

Par « polymère », on entend, par exemple, des molécules à longues chaînes de masse moléculaire élevée. Un polymère peut notamment être une substance constituée de molécules se caractérisant par la séquence d'un ou de plusieurs types d'unités monomères. Un polymère « naturel » peut comprendre, par exemple, les protéines.

Par « thermoplastique », on entend, par exemple, une matière qui devient malléable et pliable au-dessus d'une température donnée, la température de transition vitreuse Tg, mais qui en-dessous de cette Tg redevient dure, ces transformations étant réversibles.

Par « plastifiant », on entend, par exemple, une substance permettant d'abaisser la température de transition vitreuse Tg du matériau.

Par « tensioactif », on entend, par exemple, une molécule amphiphile, c'est-à-dire une molécule possédant à la fois des propriétés hydrophiles et hydrophobes.

Par « hydrophobe », on entend, par exemple, un composé ayant peu d'affinité avec l'eau et ayant tendance à ne pas s'y dissoudre. Typiquement, il s'agit d'un composé majoritairement apolaire.

Par «hydrophile », on entend, par exemple, un composé ayant une affinité avec l'eau et ayant tendance à s'y dissoudre. Typiquement, il s'agit d'un composé ayant des groupements polaire capables de former des liaisons hydrogène.

Par « hydrosoluble », on entend, par exemple, qui se dissout dans l'eau, de préférence à une température ambiante. L'hydrosolubilité d'un polymère peut être mesurée de la façon suivante : un polymère est ajouté à de l'eau à une concentration massique de 2,5%. Après agitation pendant 48 heures, la solution est filtrée pour vérifier s'il reste des particules. Lorsqu'il n'y a pas de particules dans le filtre, le polymère est considéré comme hydrosoluble.

Par « biosourcé », on entend, par exemple, un matériau contenant tout ou partie d'éléments d'origine naturelle ou renouvelable. Le matériau biosourcé est, par exemple le papier comprenant la cellulose que l'on extrait des arbres ou des plantes pour différentes applications.

Par « matière naturelle », on entend une matière qui existe naturellement dans l'environnement et qui n'a pas subi de modification chimique, en particulier une matière dont la structure chimique demeure inchangée, même si elle a été soumise à un process ou à un traitement chimique ou à un processus physique de transformation minéralogique, par exemple pour éliminer les impuretés.

Par « biodégradable », on entend, un matériau qui peut être décomposé sous l'action de micro-organismes (bactéries, champignons, algues etc.). Le résultat de cette décomposition est la formation d'eau, de CO₂ et/ou de méthane et éventuellement de sous-produits (résidus, nouvelle biomasse) non toxiques pour l'environnement. Il s'agit, par exemple, d'un matériau biodégradable selon la norme européenne EN NF 13432.

Par « compostable », on entend, par exemple d'un produit biodégradable mettant à terme le cycle du produit selon la norme EN 13432.

Selon cette norme EN13432, un matériau peut être qualifié de « compostable », s'il possède les caractéristiques suivantes :
- être en mesure d'atteindre 90% de biodégradation en moins de 6 mois s'il est soumis à un environnement riche en gaz carbonique ; ces valeurs sont testées avec la méthode standard EN14046 (également nommée ISO14855) ;
- lorsqu'il est mis en contact avec des déchets organiques pendant 3 mois, la masse de matériau doit être constituée au moins de 90% de résidus inférieurs à 2 mm de diamètre ; ces valeurs sont testées avec la méthode standard EN14045 ;
- le matériau ne doit pas avoir d'effets négatifs sur le processus de compostage ;
- une faible concentration en métaux lourds ;
- des valeurs de pH dans les limites établies ;
- un contenu en sels minéraux dans les limites établies ;
- une concentration en éléments solides volatiles dans les limites établies ;
- une concentration en azote, phosphore, magnésium et potassium dans les limites établies.

On note qu'un matériau « biosourcé » peut être compostable.

Par « repulpable », on entend, par exemple un matériau fibreux, notamment un papier, pour lequel il est possible de disperser les fibres en milieu aqueux afin de produire de la pâte appelée, pulpe. Ainsi, le matériau repulpable peut être intégré de nouveau dans la chaîne de traitement papetier. Ce caractère « repulpables » ne concerne pas certains polymères tels que les polyoléfines, par exemple le polyéthylène, ou bien le polypropylène. Ces polymères ne sont pas solubles dans l'eau et interfèrent avec le process de dispersion des fibres en milieu aqueux, empêchant ainsi de rendre « repulpable » un support souple enduit avec de telles polyoléfines ou de tel polypropylène. Ce caractère « repulpables » ne concerne pas non plus les cires, par exemple les cires à base de polyéthylène ou d'alcane, ou bien les cires d'ester, par exemple les cires d'abeille. En effet, ces cires ne sont pas hydrosolubles dans l'eau, permettant ainsi de rendre « repulpable » un support souple enduit comprenant de telles cires.

Par « caséinate », on entend, par exemple un sel de caséine dont le contre cation est choisi dans le groupe comprenant calcium, potassium, ammonium, sodium et magnésium.

La « caséine » est une protéine issue du lait qui est principalement obtenue par précipitation en ajoutant au lait un acide (caséine acide) ou de la présure (caséine présure), ou par filtration (caséine micellaire). Il existe plusieurs types de caséine dans le lait, à savoir les caséines alpha, bêta, gamma et kappa.

Le caséinate et la caséine forment un polymère filmogène thermoscellant biodégradable, compostable, et compatible alimentaire. La caséine et le caséinate sont également compatibles avec un support souple enduit biosourcé, biodégradable, compostable et/ou repulpable.

Sauf indication contraire, les pourcentages sont exprimés en masse par rapport à la masse totale du matériau.

### Brève description des figures

D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés d'autre part, sur lesquels :
[Fig.1] est une vue schématique de la chaîne de fabrication automatisée du support souple enduit selon l'invention,
[Fig.2] est une vue schématique d'un papier enduit, en coupe transversale, obtenu par le procédé selon l'invention,
[Fig.3] est une vue schématique d'un papier enduit, en coupe transversale, obtenu par une variante du procédé selon l'invention,
[Fig.4] est une vue schématique, en coupe transversale, d'un assemblage de deux papiers enduits par thermoscellage.

### Description détaillée des figures

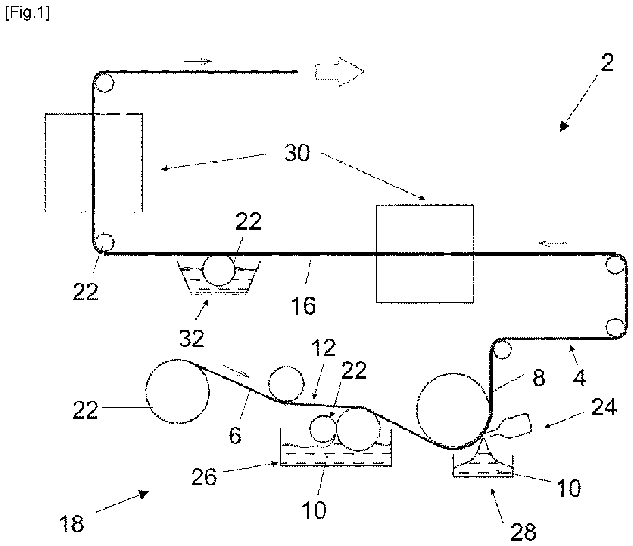

On a représenté sur la figure 1, une chaîne de fabrication automatisée 2 permettant de mettre en oeuvre le procédé selon l'invention pour fabriquer des échantillons de papiers enduits 4 présentant une face recto 6 enduite 8 d'un polymère filmogène barrière et thermoscellant 10 comprenant un caséinate et une caséine. La référence 10 désigne également la couche enduite obtenue en fin de procédé.

Le ou les polymères thermoscellants de la couche enduite 10 comprennent au moins une cire naturelle telle qu'une cire de carnauba, une cire de soja, une cire d'abeille, une cire de pin ou encore une cire de riz.

Le papier 12 utilisé pour le papier enduit 4 a un grammage de 50 g/m².

Le procédé selon l'invention comprend les étapes suivantes :
a) déposer une sauce d'enduction en vue de former la couche enduite 10 sur la face recto 6 de chaque papier 12 ;
b) sécher le papier enduit 4 de sorte que l'humidité du papier enduit 4 soit supérieure à 5 %;
c) appliquer de l'eau, sur une face verso 16 du papier enduit 4 de sorte à créer une différence d'humidité entre la face recto 6 et la face verso 16 de chaque papier enduit 4 ; et
d) sécher le papier enduit 4.

L'étape a) du procédé selon l'invention est mise en oeuvre par un moyen d'une technique d'enduction qu'est une coucheuse à lame d'air 18 qui comprend des rouleaux 22, une lame d'air 24 et un bac de polymère filmogène thermoscellant 26.

La sauce d'enduction contenu dans un bac 26, est abondamment déposé sur la face recto 6 du papier 12 par un des rouleaux 22 qui est directement en contact avec ledit polymère filmogène thermoscellant 10.

L'excès du polymère filmogène thermoscellant 10 est enlevé au moyen d'un jet d'air mis par la lame d'air 24. Cet excès est récupéré dans le bac de récupération 28 agencé pour recycler ledit excès dans le bac du polymère filmogène thermoscellant 10.

Cette coucheuse à lame d'air 18 permet de maîtriser le dépôt d'enduction avec une grande qualité et d'assurer un revêtement uniforme et régulier sur le papier 12.

Le dépôt d'enduction ayant une densité surfacique de 8 à 12 g/m², réalisé avec cette coucheuse à lame d'air 18 permet de conférer les propriétés barrières aux graisses et à l'oxygène au papier enduit 4. Les propriétés barrières à l'oxygène sont améliorées par rapport au cas où le papier 12 n'est pas enduit.

Ainsi, le papier enduit 4 a pour un indice de Cobb 1800 de l'ordre de 1 à 4 g/m² et un niveau de Kit de l'ordre de 7 à 12.

L'étape b) du procédé selon l'invention est mise en oeuvre au moyen d'une sécherie 30.

Cette étape b) permet de sécher au maximum le papier enduit 4 afin que ledit papier enduit 4 contienne le moins d'humidité résiduelle possible.

Suite à ce séchage de forte intensité, la sauce barrière thermoscellante enduite provoque de fortes contraintes sur le papier 12, sur des fibres de ce papier 12, contraintes qui auraient pour effet d'enrouler le papier enduit 4 posé à plat après la fabrication. On souhaite éviter cet effet d'enroulement.

Ainsi, l'étape de séchage b) intervient aussitôt après le dépôt de la sauce barrière thermoscellante enduite de sorte que cette sauce n'ait pas encore le temps de sécher naturellement, et ce afin de maximiser les contraintes auxquelles la couche enduite 10 issue de la sauce est soumise.

L'étape c) du procédé selon l'invention est réalisée avec de l'eau appliquée à la face verso 16 du papier enduit 4 à l'aide d'un rouleau 22 en rotation en contact avec de l'eau contenu dans un bac d'eau 32.

L'étape d) du procédé selon l'invention est réalisée avec une sécherie 30.

Au cours de l'étape de séchage d), l'humidité de la face recto 6 étant très faible, de l'eau s'évapore très majoritairement de la face verso 16, provoquant une contrainte sur des fibres formant le papier 12, contrainte qui va induire un effet d'enroulement sur la face verso 16. Cet effet d'enroulement sur la face verso 16 est opposé à l'effet d'enroulement de la face recto 6 de sorte que l'on puisse obtenir une compensation des effets d'enroulement sur les faces recto 6 et verso 16. Cette compensation peut nécessiter une certaine durée, pour que le papier enduit 4 se stabilise.

Ainsi, lorsque ces effets se sont compensés, le papier 12, posé sur une surface plane, présente une planéité satisfaisante.

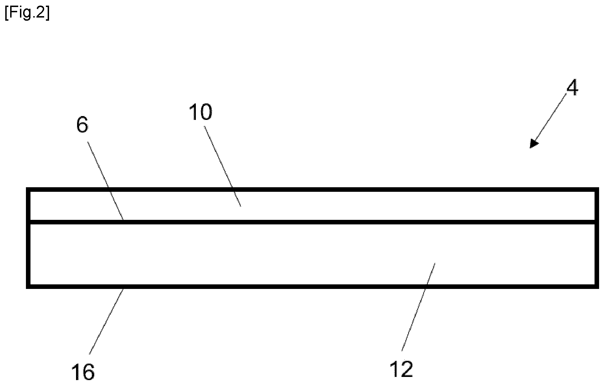

On a représenté sur la figure 2, de façon schématique, en coupe transversale, un papier enduit 4 obtenu par le procédé selon l'invention.

Le papier enduit 4 comportant les faces recto 6 et verso 16, comporte sur sa face recto 6 une couche enduite 10 tandis que la face verso 16 dudit papier enduit 4 ne comporte pas de polymère filmogène thermoscellant 10.

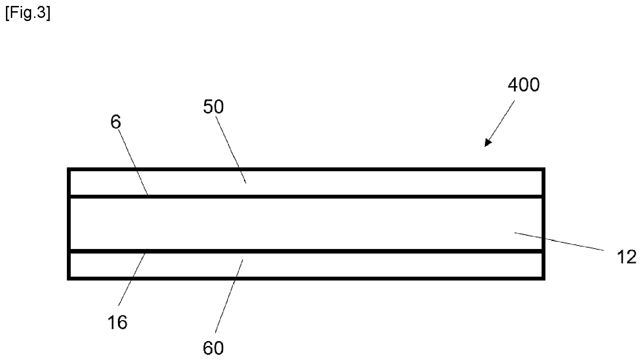

On a représenté sur la figure 3, de façon schématique, en coupe transversale, un papier enduit 400 obtenu par une variante du procédé selon l'invention.

Le papier enduit 400 ainsi obtenu présente une face recto 6 sur lequel une couche enduite 50 est déposée et une face verso 16 sur lequel une deuxième couche 60 est déposée, les première et deuxième couches enduites 50, 60 comprenant des polymères naturels avec les compositions présentées plus haut..

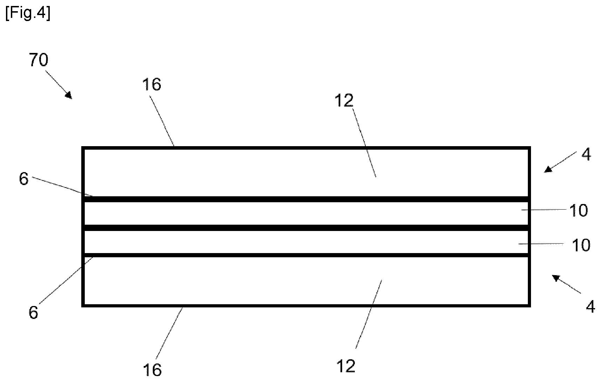

On a représenté sur la figure 4, de façon schématique, en coupe transversale, un assemblage 70 par thermoscellage de deux papiers enduits 4 obtenus par le procédé selon l'invention.

Deux papiers enduits 4 présentant une face recto 6 et verso 16, chaque papier enduit 4 comportant sur sa face recto 6 une couche enduite 10, sont assemblés sans que l'on ait besoin d'insérer une couche adhésive supplémentaire (non représentée) entre chaque couche du polymère filmogène thermoscellant 10.

II est remarquable de noter que le procédé selon l'invention permet d'obtenir un papier enduit 4 destiné à un emballage, ledit papier enduit 4 étant biosourcé, biodégradable, compostable et repulpable, avec des propriétés mécaniques et chimiques équivalentes d'un papier enduit avec un polymère filmogène non biodégradable (non représenté), à savoir un polymère filmogène plastique communément utilisé dans le commerce.

En particulier, ledit papier enduit 4 obtenu avec le procédé selon l'invention présente les propriétés barrières à l'huile et aux graisses (un indice de Cobb 1800 de l'ordre de 1 à 4 g/m² et un niveau de Kit de l'ordre de 7 à 12) et à l'oxygène (niveau de perméabilité à l'oxygène inférieur à 10 cm³/(m².24h)) en combinaison des propriétés thermoscellantes.

En outre, le procédé selon l'invention permet la fabrication industrielle dudit papier enduit 4 dans une chaîne de fabrication de papier automatisée alors qu'un tel papier enduit 4 ne pouvait être obtenu via cette chaîne de fabrication jusqu'à présent à cause de l'effet d'enroulement du papier enduit 4.

Par ailleurs, le procédé selon l'invention permet de réduire le nombre de couches nécessaires pour le papier enduit 4 tout en le rendant plus écologique, économique et compatible avec des applications diverses telles que des applications d'emballage, notamment des applications d'emballages alimentaires.

Dans une variante de l'invention, la couche enduite est à base d'une cire naturelle telle qu'une cire de carnauba, une cire de soja, une cire d'abeille, une cire de pin ou encore une cire de riz.

De préférence, le ou les polymères thermoscellants, notamment la cire, sont présents dans la couche enduite avec un pourcentage en poids compris entre 1% et 30%, notamment entre 5% et 20%, notamment entre 10% et 15%, notamment entre 5% et 15%.

Le tableau ci-dessous montre les résultats pour trois exemples de papier obtenus grâce à l'invention, respectivement pour trois compositions de matière naturelle dans la couche enduite du papier (respectivement 50% pour l'Exemple 1, 80% pour l'Exemple 2, 100% pour l'Exemple 3).

| Caractéristiques | Exemple 1 | Exemple 2 | Exemple 3 |
|---|---|---|---|
| Support souple | Papier | Papier | Papier |
| % mat. naturelle (biosourcée) de la couche enduite | 50% | 80% | 100% |
| Force de scellage [N/15mm] | 5 | 3,5 | 3,5 |
| MVTR [g/(m².24h), (38°C/90%HR) | 50 | n.a. | n.a. |
| OTR [cm³/(m².24h), 23°C/50%HR | n.a. | 15 | n.a. |
| Cobb₁₈₀₀ (huile) | n.a. | n.a. | 2,5 |

On remarque que la force de scellage est d'un niveau satisfaisant pour les trois Exemples.

Le taux de transmission de vapeur d'eau (ou en anglais « Moisture Vapor Transmission Rate (MVTR)) est satisfaisant pour l'Exemple 1. Les données non disponibles sont notées n.a..

Le taux de transmission d'oxygène (ou en anglais « Oxygen Transmission Rate (OTR)) est satisfaisant pour l'Exemple 2.

La propriété barrière à l'huile est satisfaisant pour l'Exemple 3.

## Revendications

1. Support souple enduit (4), destiné à une fabrication d'un produit fini, notamment d'un emballage, le support souple enduit ayant une forme plane lorsqu'il est librement posé à plat, ce support souple enduit comprenant un support souple contenant, en poids, au moins 90%, ou au moins 95%, d'une première matière naturelle, ce support souple étant enduit d'une couche enduite contenant, en poids, au moins 50%, ou au moins 80%, ou au moins 90%, ou au moins 95%, d'une deuxième matière naturelle formée par au moins un polymère thermoscellant, ce ou ces polymères thermoscellants (10) présentant notamment l'une au moins des propriétés suivantes : barrière oxygène, barrière à l'huile/graisse, barrière à l'eau, barrière à la vapeur d'eau.

2. Support souple enduit selon la revendication précédente, dans lequel le ou les polymères thermoscellants de la couche enduite comprennent au moins une cire naturelle telle qu'une cire de carnauba, une cire de soja, une cire d'abeille, une cire de pin ou encore une cire de riz.

3. Support souple enduit selon la revendication 1, dans lequel le ou les polymères thermoscellants formant la couche enduite sont à base de polysaccharides tels que l'alginate ou l'amidon le chitosane ou un dérivé cellulosique.

4. Support souple enduit selon l'une des revendications précédentes, dans lequel le ou les polymères thermoscellants, notamment la cire, sont présents dans la couche enduite avec un pourcentage en poids compris entre 1% et 30%, notamment entre 5% et 20%, notamment entre 10% et 15%, notamment entre 5% et 15%.

5. Support souple enduit selon l'une des revendications précédentes, dans lequel le grammage du support souple enduit (4) est compris entre 20 et 300 g/m², préférentiellement est compris entre 40 et 100 g/m2.

6. Emballage comportant deux zones appartenant à un même support souple enduit selon l'une des revendications précédentes ou appartenant respectivement à deux supports souples enduits selon l'une des revendications précédentes, ces zones étant appliquées l'une contre l'autre par leurs faces enduites respectives.

7. Emballage selon la revendication précédente, dans lequel le polymère thermoscellant est choisi pour obtenir une force de scellage entre les zones scellées ensemble qui est supérieure ou égale à 2,5 N/15mm et de préférence supérieure ou égale à 3,5 N/15mm.

8. Procédé de fabrication d'un emballage, comportant les étapes suivantes :
- fournir deux zones de support souple enduit selon l'une des revendications 1 à 5,
- sceller ces deux zones ensemble en pressant ces deux zones l'une contre l'autre en apportant de la chaleur, notamment au moyen de mâchoires chauffantes, de manière à obtenir l'emballage.

9. Procédé selon la revendication précédente, dans lequel la viscosité de la sauce d'enduction est inférieure à 400 mPa.s, ou inférieure à 200 ou 120 mPa.s.

10. Procédé selon l'une des revendications 8 et 9, comportant une étape de séchage du support souple enduit.
